# EUROPEAN PATENT SPECIFICATION

(11) **EP 1 252 013 B1**
(45) Date of publication and mention of the grant of the patent: **18.03.2009**
(21) Application number: 01902308.4
(22) Date of filing: 11.01.2001
(51) Int. Cl.: B32B 5/18, B32B 27/32

(54) **THERMOFORMABLE MULTI-LAYER PARTIALLY FOAMED SHEET**
THERMOFORMBARE TEILWEISE GESCHÄUMTE MEHRSCHICHTFOLIE
FEUILLE THERMOFORMABLE PARTIELLEMENT MOUSSEE A COUCHES MULTIPLES

(30) Priority: 26.01.2000 EP 00101499
(43) Date of publication of application: 30.10.2002
(73) Proprietor: Cryovac, Inc., Duncan, S.C. 29334 (US)
(72) Inventor: DI CESARE, Gregorio, I-20023 Cerro Maggiore (IT); COMINETTI, Marzia, I-20017 RHO (IT)
(74) Representative: De Carli, Elda
(86) International application number: PCT/EP2001/000312
(87) International publication number: WO 2001/054894

(56) References cited:
- EP-A- 0 570 222
- WO-A-96/25290
- GB-A- 2 263 435
- US-A- 5 164 258

## Description

The present invention relates to a multi-layer, partially foamed, thermoformable sheet suitable for the production of packaging material.

In particular the present invention relates to a rigid or semi-rigid multi-layer sheet of thermoplastic material comprising a foamed layer comprising polypropylene, a foamed layer comprising a polyethylene, and a substantially unfoamed heat-sealing layer, said sheet being thermoformable into shaped articles for packaging.

Thermoforming is a common method for forming trays to be used in the packaging art for holding the products to be packaged. In some cases pre-formed trays are fed to a filling machine which inserts or lays the product to be packaged onto the tray and then either seals on a lid or wrap the loaded tray up. In most of the cases, however, a horizontal thermoform-fill-seal machine is employed. Said machine typically requires two separate webs of material, a lower or bottom web and a upper or top web. The lower web must be designed to be easily thermoformable in-line as the machine creates a more-or-less shallow tray therefrom by pulling it across a heated cavity by a vacuum forming, optionally plug-assisted, thermoforming process. As a lid or upper web is then sealed to the thus formed tray or tray rim, the lower web must also be heat-sealable and in some cases it is also required that it has a low permeability to gases, in particular oxygen, in order to prolong the shelf-life of oxygen susceptible products, e.g. most of the food products.

Other packaging machines, where an in-line thermoformable lower web is required, are those employed for skin packaging. In these machines the lower web is thermoformed into a tray, the product to be packaged is loaded thereon and the upper web is drawn down by vacuum all around the product until the film conforms so faithfully to the product contours that it becomes like a skin. Also in this case for the lower web, a sheet is required that can be easily thermoformed and has good heat sealability and preferably also gas barrier properties.

Multi-layer sheets are therefore employed where the choice of the resins and the combination of the different layers are studied to provide the end structure with the desired properties.

Multi-layer cast sheets are typically employed, but more recently also multi-layer partially foamed sheets have been introduced in the market, as the appearance of a foamed material is highly appreciated by the end users.

Furthermore the use of an at least partially foamed material increases the thickness and the rigidity of the sheet and of the thermoformed article, with the same amount, by weight, of plastic material.

Polypropylene is a polymer commonly employed for the foamed layer of a partially foamed thermoformable structure. Polypropylene can in fact be thermoformed, is cheap and stiff enough to impart some rigidity to the end partially foamed sheet.

Thermoformable sheets consisting of a foamed polypropylene layer laminated or co-extruded with a multilayer film comprising a gas barrier layer, typically polyamide or ethylene-vinyl alcohol, and a heat-sealing outer layer are known. However the known sheets, where the bulk of the structure is made by the foamed polypropylene layer, have the disadvantage of an impaired formability, even when a low modulus polypropylene is employed. Thermoforming these structures in fact requires high temperatures (typically around 150 °C) and long forming times (around 5 seconds). Furthermore optimum results, in terms of shape definition, are obtained only when in the thermoforming process conventional tools are used (e.g. with not many grooves or not too deep grooves, with smooth slopes, etc.).

There is a need therefore for a multi-layer sheet, having a foamed appearance, which can be thermoformed into a rigid or semi-rigid shaped container, such as a tray, at lower temperatures and shorter forming times.

There is also a need for a multi-layer sheet, having a foamed appearance, that can be thermoformed into a variety of rigid or semi-rigid shaped containers, with highly demanding tools.

It has now been found that it is possible to meet the above needs with a partially foamed, multi-layer sheet comprising a foamed layer comprising polypropylene, an inner foamed layer comprising a polyethylene, and an outer, substantially unfoamed heat-sealing layer.

### SUMMARY OF THE INVENTION

A first object of the present invention is therefore a thermoformable, multi-layer, sheet comprising a foamed layer (a) comprising polypropylene, a substantially unfoamed outer heat-sealing layer (c) and a foamed layer (b) comprising a polyethylene, positioned between layers (a) and (c).

The polypropylene used in the present invention for foam layer (a) is generally crystalline polypropylene, for example, isotactic polypropylene. While HMS polypropylene resins might be employed, it would not be necessary or advisable to use them because general-purpose isotactic polypropylene is perfectly suitable for this application.

The flexural modulus of the polypropylene used for the foam layer (a) is typically comprised between about 1,200 MPa and about 2,150 MPa. Preferably polypropylene resins with a flexural modulus ≥ 1,300 MPa, and more preferably ≥ 1,500 MPa are employed. Examples of suitable polypropylene resins are for instance those commercially available from Montell as Polypropylene KF 6100 (Flexural Modulus, evaluated by ISO Standard Method 178, of about 1,300 MPa), as Adstif^{™} 680 ADXP (Flexural Modulus of 2,150 MPa) and Adstif^{™} 699 ADXP (Flexural Modulus of 1,950 MPa). Blends of polypropylene resins with different flexural modulus may also be employed. The Melt Index of the polypropylene, measured by ASTM 1238 Condition E, may be up to 20 g/10 min and generally it is up to 15 g/10 min, typically comprised between about 1 and about 12 g/10 min.

The foamed polypropylene layer (a) is preferably obtained through a chemical foaming process, by extruding the resin admixed with the suitable amount of a chemical blowing agent, i.e. a compound that reacts or decomposes at elevated temperatures, such as those employed in extrusion, to give a product that is normally a gas at atmospheric pressure. It would however be possible also to employ a physical foaming process where foaming is obtained by the use of a blowing agent such as a hydrocarbon, a chlorinated or chlorofluorinated hydrocarbon, an inert gas, or a blend thereof.

The polypropylene foamed layer (a) is preferably, even if not necessarily, an outer layer and more particularly it is the outermost layer of the multi-layer thermoformable sheet, i.e. the layer that in the thermoformed container will be the furthest one from the packaged product.

Alternatively said foamed layer (a) may be an internal layer and one or more additional layers of thermoplastic, foamed or solid, material or blend of materials can be adhered to the surface of said foamed layer (a) which is opposite to the foamed polyethylene layer (b). Said additional layer(s) may be useful for instance to improve the appearance or the properties of the thermoformable sheet, e.g. providing a paper-like appearance and touch or a colored/metallised appearance, or improving the thermoformable sheet properties with e.g. UV absorbing properties, antistatic properties, or gas-barrier properties, and should be selected in such a way to withstand direct contact with the heated cavity die during thermoforming.

The outer heat-sealing layer (c), i.e. the layer that in the end package will be in direct contact with the packaged product and will be involved in the sealing of the thermoformable sheet of the invention to the top or upper film, is a substantially unfoamed, solid, layer of a heat-sealable resin or blend of resins.

The term "substantially unfoamed" is used herein to identify a layer that has not been submitted to a foaming, i.e. that has not been admixed with a chemical or physical foaming agent before or during extrusion. This term however does not exclude, in particular for the layer or layers that are directly adhered to the surfaces of the foamed layers, that the evolution of gas in the adjacent layer might give rise to a certain, non-substantial, foaming also in these layers.

Suitable heat-sealing polymers for layer (c) are polyolefins preferably having a melting point < 140 °C, and more preferably < 130°C. Such a heat-sealing layer will typically comprise polyethylene homopolymers; ethylene-(C₄-C₈)-α-olefin copolymers having a density ≤ 0.915 g/cm³; blends thereof with minor amount of polyethylene homopolymers; ethylene-vinyl acetate copolymers; ethylene-acrylic or methacrylic acid copolymers including ionomers; ethylene-(C₄-C₈)-α-olefin copolymers having a density from about 0.915 g/cm³ to about 0.930 g/cm³; blends thereof with ethylene-vinyl acetate copolymers or ethylene-alkyl (meth)acrylate copolymers; ethylene-propylene-butene ter-polymers; ethylene-alkyl acrylate-maleic anhydride ter-polymers; and the like polymers.

For the scope of the present application the ethylene copolymers can be "heterogeneous" or "homogeneous", wherein the phrase "heterogeneous polymer" refers to the conventional polymers typically obtained by co-polymerization in heterogeneous phase using Ziegler-Natta catalysts and the phrase "homogeneous polymer" refers to polymerization reaction products of relatively narrow molecular weight distribution and relatively narrow composition distribution generally prepared by polymerization in homogeneous phase typically using metallocene, or other single site-type catalysts.

The multi-layer thermoformable sheet of the present invention is characterized by the presence of a foamed layer (b) comprising a polyethylene positioned between layers (a) and (c).

As used herein the word "between", as applied to a sheet layer, expressed as being between two other specific layers, includes both direct adhesion of the subject layer to the two other layers it is between, without a tie layer, adhesive, or other layer there-between, and lack of direct adhesion to either or both of the two other layers the subject layer is between, i.e., one or more additional layers can be imposed between the subject layer and one or more of the layers the subject layer is between.

The polyethylene of foamed layer (b) can be an ethylene homopolymer or an ethylene copolymer with one or more other olefins and/or with a non-olefinic comonomer copolymerizable with ethylene, such as vinyl monomers, modified polymers thereof, and the like. Specific examples of ethylene copolymers include ethylene-(C₄-C₈)-α-olefin copolymers, ethylene-vinyl acetate copolymers, ethylene-ethyl acrylate copolymers, ethylene-butyl acrylate copolymers, ethylene-methyl acrylate copolymers, ethylene-acrylic acid copolymers, ethylene-methacrylic acid copolymers, ionomer resins, ethylene-alkyl acrylate-maleic anhydride ter-polymers, etc.. It can also conveniently be a modified ethylene homo- or copolymer or a blend of an ethylene homopolymer or copolymer with a modified ethylene homo- or co-polymer, wherein as used herein the term "modified", when referred to any polyolefin, is inclusive of modified polymer prepared by copolymerizing the homopolymer of the olefin or copolymer thereof with an unsaturated carboxylic acid, e.g., maleic acid, fumaric acid or the like, or a derivative thereof such as the anhydride, ester or metal salt or the like; or by incorporating into the olefin homopolymer or copolymer, an unsaturated carboxylic acid, e.g., maleic acid, fumaric acid or the like, or a derivative thereof such as the anhydride, ester or metal salt or the like. Examples of preferred modified polyethylenes are in particular ethylene copolymers having an anhydride functionality, as defined above, grafted thereon and/or copolymerized therewith and/or blended therewith, wherein more preferably, such modified polyethylenes have the anhydride functionality grafted on or polymerized therewith, as opposed to merely blended therewith.

Preferably the polyethylene of foamed layer (b) is an ethylene homopolymer or an ethylene copolymer with one or more (C₄-C₈)-α-olefins, and more preferably the polyethylene of foamed layer (b) is an ethylene homopolymer.

In one most preferred embodiment the polyethylene is an ethylene homopolymer with a density lower than 0.94 g/cm³, preferably lower than 0.93 g/cm³, typically comprised between 0.91 and 0.93 g/cm³, or an ethylene-(C₄-C₈)-α-olefin copolymer with a density lower than 0.94 g/cm³, preferably lower than 0.93 g/cm³, and even more preferably lower than 0.92 g/cm³, typically comprised between 0.89 g/cm³ and 0.91 g/cm³.

In another most preferred embodiment the polyethylene is a high density polyethylene, i.e. an ethylene homopolymer with a density comprised between 0.94 and 0.985 g/cm³,

Layer (b) may comprise also other polymers blended with the polyethylene. As an example a composition suitable for layer (b) comprises a blend of a major proportion of an optionally modified polyethylene with a minor proportion, e.g. 10 % by wt., 20 % by wt., 30 % by wt. of the total weight of the polymer blend, of a propylene-based polymer, such as polypropylene, ethylene-propylene copolymer, modified polypropylene, modified ethylene-propylene copolymer, and the like polymers.

Also for the foamed layer (b) comprising a polyethylene, chemical foaming is preferred.

Preferably the polypropylene foamed layer (a), the polyethylene foamed layer (b), and the heat-sealing layer (c) are co-extruded.

Tie layers may be present on either one or both sides of the polyethylene foamed layer (b) in order to improve the bond between the various layers. Suitable tie layers will preferably comprise modified polyolefins, and more preferably modified polyethylene, modified ethylene co-polymers, such as modified ethylene-(C₄-C₈)-α-olefin copolymers, and modified ethylene-unsaturated ester copolymers, e.g. modified ethylene-vinyl acetate copolymers, and modified polypropylene.

If gas-barrier properties are desired, the multi-layer partially foamed sheet will comprise also a substantially unfoamed gas barrier layer (d), i.e. a layer of a suitably selected polymeric material and of the suitably selected thickness to provide for an overall multi-layer sheet with an oxygen permeability lower than 200 cm³/m².day.atm, preferably lower than 150 cm³/m².day.atm, more preferably lower than 125 cm³/m².day.atm, and even more preferably lower than 100 cm3/m².day.atm. Suitable resins for use in said functional layer are preferably ethylene-vinyl alcohol copolymers (EVOH), vinylidene chloride copolymers (PVDC), polyamides, and blends thereof, such as blends of one or more EVOH with one or more polyamides.

As used herein, the term EVOH includes saponified or hydrolyzed ethylene-vinyl acetate copolymers, and refers to vinyl alcohol copolymers having an ethylene comonomer content preferably comprised from about 28 to about 48 mole %, more preferably, from about 32 to about 44 mole % ethylene, and even more preferably, from about 36 to about 42 mole % ethylene, and a saponification degree of at least 85 %, preferably at least 90 %.

As used herein the term PVDC refers to a vinylidene chloride copolymer wherein a major amount of the copolymer comprises vinylidene chloride and a minor amount of the copolymer comprises one or more unsaturated monomers copolymerisable therewith, typically vinyl chloride, and alkyl acrylates or methacrylates (e.g. methyl acrylate or methacrylate) or to a blend thereof in different proportions. Generally said PVDC contains plasticisers and/or stabilisers as known in the art.

As used herein, the term polyamide is intended to refer to both polyamides and co-or ter-polyamides. This term specifically includes aliphatic polyamides or co-polyamides, aromatic polyamides or co-polyamides, and partially aromatic polyamides or co-polyamides, modifications thereof and blends thereof.

In a preferred embodiment of the invention the gas-barrier layer (d) is between the polypropylene foamed layer (a) and the polyethylene foamed layer (c) and tie layers are preferably employed to increase the bond between said layer (d) and those adhering thereto on either sides.

In another embodiment a gas-barrier layer (d) of PVDC is coated on the outer surface of the foamed polypropylene layer (a).

In a preferred embodiment of the present invention the thermoformable, multi-layer, sheet also comprises an easy opening feature that can be obtained either by suitably selecting the type of polymers or polymer blends used for the heat-sealing layer (c) or by the use of an internal layer having certain specific characteristics, directly adhering to a thin heat-sealing layer (c).

As an example, the heat-sealing layer (c) may comprise a so-called "peelable" blend. When the thermoformed bottom web, bearing said peelable blend in the heat-sealing layer, is sealed to a suitably selected top web, easy opening of the end package is obtained by separating the two webs at the seal interface by a peeling mechanism.

Alternatively, a thin heat-sealing layer (c) may be adhered directly to an internal layer of a polymer with which said heat-sealing layer (c) has a low bond. In this case easy opening of the package is obtained by first breaking through the thickness of the thin heat-sealing layer and then delaminating said heat-sealing layer from the underlying support or film.

Still alternatively the easy opening feature may be provided by the use of a layer of a blend of polymers having a low internal cohesion. Said low cohesion layer may be the heat-sealing layer (c) or it may be a layer directly adhering to a thin heat-sealing layer (c). Opening of the package in such a case is achieved by internal rupture of the low cohesion layer (and, if present, of the thin heat-sealing layer first). Examples of blends useful in this alternative easy opening system are described for instance in EP-B-192,131 or PCT/EP99/02411.

Additional layers may be present in the overall structure to further increase the bulk thereof or to improve other properties of the end structure. As an example, the multi-layer partially foamed sheet may comprise additional foamed polypropylene layers (a) or polyethylene layers (b).

The thickness of the overall thermoformable sheet of the present invention is typically comprised between about 400 and about 1,200 µm. For most of the conventional applications a preferred thickness is in the range of from about 450 to about 1,000 µm, with a most preferred thickness in the range of from about 500 to about 900 µm.

The overall thickness of the foamed polypropylene layers (a) may range from about 35 to about 80 % of the thickness of the entire sheet, preferably from about 40 to about 75 %, and even more preferably from about 45 to about 70 %, also depending on the flexural modulus of the polypropylene employed, i.e. lower % thicknesses are typically employed when polypropylene with a higher flexural modulus is used.

The overall thickness of the polyethylene foamed layers (b) is generally comprised between 15 and 40 % of the thickness of the entire sheet, preferably from about 20 to about 35 %, also depending on the density of the polyethylene, i.e., lower % thicknesses are typically employed when polyethylene with a higher density is used.

In a preferred embodiment of the present invention the ratio between the thickness of the foamed polyethylene layers (b) and that of the polypropylene layers (a) is the highest value that still provides for a flexural modulus of the end multi-layer sheet ≥ 550 MPa, preferably ≥ 650 MPa, and more preferably ≥ 700 MPa.

Typically the thickness of the heat-sealing layer will be comprised between about 3 µm and about 100 µm, preferably between about 5 µm and about 80 µm, more preferably between about 8 µm and about 50 µm. Thicker layers can be employed particularly if it is necessary to provide the structure with some bulk while thinner layers may be necessary when the package comprises an easy opening feature involving as the first step breakage of a thin heat-sealing layer.

When there is a gas-barrier layer (d), its thickness is generally comprised between about 3 and about 40 µm, preferably between about 4 and about 30 µm, and even more preferably between about 5 and about 25 µm.

The thickness of the possible tie layers is that needed to provide for the desired bond, and it is generally comprised between few microns and 40 µm, and preferably between 10 and 30 µm.

The resins used in the manufacture of the films according to the present invention can be suitably additivated as known in the art in order to improve the properties of the film or the manufacturing process thereof or modify the film appearance As an example the resins may contain stabilizers, anti oxidants, pigments, UV absorbers, cross-linking enhancers or cross-linking inhibitors, anti-fog agents, slip and anti-blocking agents, etc., as conventionally known in this field.

In a preferred embodiment the present invention relates to a thermoformable, multi-layer, sheet comprising a chemically foamed layer (a) comprising polypropylene, a substantially unfoamed heat-sealing outer layer (c) and a chemically foamed polyethylene layer (b) positioned between layers (a) and (c).

As indicated above, chemical foaming is obtained by extruding the resins admixed with the suitable amount of a chemical blowing agent, preferably an endothermic chemical blowing agent. A chemical foaming agent is a chemical or compound that reacts or decomposes at elevated temperatures, such as those employed in extrusion, to give a product that is normally a gas at atmospheric pressure. The most common chemical foaming agent is sodium bicarbonate with a small amount of citric or tartaric acid as a co-agent. These agents are typically in dry powder form and are dusted or master-batched into the thermoplastic pellets prior to introduction into the extrusion equipment. Proprietary alkali carbonate mixtures suitable as chemical foam agents are those sold by Boehringer Ingelheim under the trade name Hydrocerol^{™} or by Hoechst Celanese under the trade name Hostatron^{™}. Generally these products are sold in the form of master-batches containing various amounts of the foaming agents (typically from about 10 to about 70 % or even more) and said master-batches are added to the pellets of the resins in an amount typically comprised between about 0.1 and about 4.0 % by weight. In the process for the manufacture of a thermoformable sheet of the present invention, the resins used for the foamed layers need not to contain the same foaming agent or the same amount of foaming agent. Typically the amount of foaming master-batch in any foamed layer will be comprised between about 0.2 and about 3.5 % by weight, and preferably between about 0.5 and about 2.5 % by weight.

The density of the thermoformable sheet of the present invention is typically ≤ 0.8 g/cm³, preferably ≤ 0.7 g/cm³.

One of the advantages of the thermoformable sheet according to the present invention is that it can be obtained by co-extrusion, using a flat die. The use of a flat die and of the flat sheet technology, providing for the calendering of the flat multilayer sheet following extrusion and quenching, allows a better thickness control of the end sheet. An annular die, as required in the physical foaming processes, could however be employed also in this case.

In a preferred embodiment of the present invention the multilayer partially foamed sheet is fully co-extruded.

The invention may be further understood by reference to the following examples that are provided for the purpose of representation and are not to be construed as limiting the scope of the invention. Unless stated otherwise, all percentages, parts, etc. are by weight.

### Example 1

The following resins have been co-extruded through a flat die in the sequence reported below. The layer number 1. is the layer of the end sheet that in the thermoforming process is in contact with the heated cavity die. The thickness of each layer in the end partially foamed sheet is also reported between parentheses :
1. Polypropylene (Polypropylene KF 6100 sold by Montell - flexural modulus of about 1,300 MPa) blended with 1 % by weight of Hydrocerol^{™} CF 40 E (masterbatch containing about 40 % of the foaming agent) (50 µm);
2. Polypropylene (Polypropylene KF 6100 sold by Montell; MI = 3.0 measured by ASTM D1238 at 230°C and 2.16 kg; flexural modulus of about 1,300 MPa) blended with 0.7 % by weight of Hydrocerol^{™} CF 40 E and 1.5 % of a masterbatch of a green pigment in LDPE (220 µm);
3. Rubber modified ethylene-α-olefin copolymer grafted with maleic anhydride (Admer^{™} 1335 E sold by Mitsui) (25 µm);
4. Ethylene-vinyl alcohol copolymer with 38 % by mole of ethylene (Soarnol ET3803 sold by Nippon Goshei) (25 µm);
5. Rubber modified ethylene-α-olefin copolymer grafted with maleic anhydride (Admer^{™} 1335 E sold by Mitsui) (25 µm);
6. Low density polyethylene (Escorene LD 158 BW sold by Exxon; d = 0.925 g/cm³; MI = 2 measured by ASTM D1238 at 190°C and 2.16 kg) blended with 0.7 % by weight of Hydrocerol^{™} CF 40 E and 1.5 % of a masterbatch of a green pigment in LDPE (220 µm);
7. Rubber modified ethylene-α-olefin copolymer grafted with maleic anhydride (Admer^{™} 1335 E sold by Mitsui) (25 µm);
8. Blend of 58 % by weight of ionomer (Surlyn^{™} 1601 sold by DuPont), 22 % by weight of modified ethylene-vinyl acetate copolymer (Elvaloy^{™} 741A sold by DuPont), and 20 % of polybutene (Polybutene 8640 sold by Shell) (12 µm);
9. Ethylene-vinyl acetate copolymer 9.4 % VA (Escorene^{™} UL00909 sold by Exxon; MI = 9 measured by ASTM D1238 at 190°C and 2.16 kg) (5 µm).

The co-extruded sheet was quenched on a chill roll and calendered.

Flexural modulus of the end sheet was about 700 MPa in MD (machine direction) and about 600 MPa in TD (transverse direction).

The density of the end sheet was about 0.7 g/cm³.

Oxygen permeability of the obtained structure was about 1-2 cm³/m².day.atm, when measured at 23 °C and 0 % R. H. according to ASTM D3985.

The thermoformability in-line of the obtained sheet was tested on a Multivac CD 6000 and RCD series machine for Vacuum Skin Packaging. The thermoforming conditions were as follows :
- heating temperature : 130 °C (with sandwich plate)
- forming pressure : 1.8-2.2 bar
- heating time : 3 seconds
- forming time : 3 seconds
- forming depth : 10 mm, 20 mm, and 27 mm.

In all the three depths tested the results were very good and both corners and grooves were very well defined with no creases or cracks.

The test with 20 mm forming depth was repeated without using the sandwich plate method but heating only the lowermost surface of the sheet (the surface that in the thermoforming process is in direct contact with the cavity die). Also in this case the results were very good and both corners and grooves were very well defined with no creases or cracks.

### Example 2

The procedure of Example 1 has been substantially repeated but varying the thickness of the layers 2. and 6. as indicated below:
2. 380 µm
6. 150 µm

The thus obtained sheet was thermoformed under the following conditions with optimum results :
- heating temperature : 135 °C (with sandwich plate)
- forming pressure : 1.8-2.2 bar
- heating time : 4 seconds
- forming time : 4 seconds
- forming depth : 20 mm and 27 mm.

### Example 3

The procedure of Example 1 has been substantially repeated but varying the thickness of the layers 2. and 6. as indicated below :
2. 225 µm
6. 110 µm

The thus obtained sheet was thermoformed under the conditions used for Example 2 with optimum results.

### Example 4

The following resins have been co-extruded through a flat die in the sequence reported below. The layer number 1. is the layer of the end sheet that in the thermoforming process is in contact with the heated cavity die. The thickness of each layer in the end partially foamed sheet is also reported between parentheses :
1. Polypropylene (Polypropylene KF 6100 sold by Montell - flexural modulus of about 1,300 MPa) blended with 1 % by weight of Hydrocerol^{™} CF 40 E (masterbatch containing about 40 % of the foaming agent) (50 µm);
2. Polypropylene (Polypropylene KF 6100 sold by Montell; MI = 3.0 measured by ASTM D1238 at 230°C and 2.16 kg; flexural modulus of about 1,300 MPa) blended with 0.7 % by weight of Hydrocerol^{™} CF 40 E and 1.5 % of a masterbatch of a green pigment in LDPE (225 µm);
3. Rubber modified ethylene-α-olefin copolymer grafted with maleic anhydride (Admer^{™} 1335 E sold by Mitsui) (25 µm);
4. Polypropylene (Adstif^{™} 699 ADXP sold by Montell - flexural modulus of about 1950 MPa) (25 µm);
5. Rubber modified ethylene-α-olefin copolymer grafted with maleic anhydride (Admer^{™} 1335 E sold by Mitsui) (25 µm);
6. Low density polyethylene (Escorene LD 158 BW sold by Exxon; d = 0.925 g/cm³; MI = 2 measured by ASTM D1238 at 190°C and 2.16 kg) blended with 0.7 % by weight of Hydrocerol^{™} CF 40 E and 1.5 % of a masterbatch of a green pigment in LDPE (110 µm);
7. Rubber modified ethylene-α-olefin copolymer grafted with maleic anhydride (Admer^{™} 1335 E sold by Mitsui) (25 µm);
8. Blend of 58 % by weight of ionomer (Surlyn^{™} 1601 sold by DuPont), 22 % by weight of modified ethylene-vinyl acetate copolymer (Elvaloy^{™} 741A sold by DuPont), and 20 % of polybutene (Polybutene 8640 sold by Shell) (12 µm);
9. Ethylene-vinyl acetate copolymer 9.4 % VA (Escorene^{™} UL00909 sold by Exxon; MI = 9 measured by ASTM D1238 at 190°C and 2.16 kg) (5 µm).

The co-extruded sheet was quenched on a chill roll and calendered.

The thus obtained sheet was thermoformed under the conditions used for Example 2 with optimum results

### Example 5

The procedure of Example 1 has been substantially repeated but replacing the low density polyethylene in layer 6. with a high density polyethylene (Rigidex HD6070FA sold by BP; d = 0.963 g/cm³; MI = 7.6 measured by ASTM D1238 at 190°C and 2.16 kg).

The thus obtained sheet was thermoformed under the conditions used for Example 2 with optimum results.

### Comparative Example 1

The following resins have been co-extruded through a flat die in the sequence reported below:
1. Low flexural modulus polypropylene (Montell YX37F sold by Montell - flexural modulus of about 1,200 MPa) blended with 2 % by weight of Hydrocerol^{™} CF 40 E (320 µm);
2. Rubber modified ethylene-α-olefin copolymer grafted with maleic anhydride (Admer^{™} 1335 E sold by Mitsui) (20 µm);
3. Ethylene-vinyl alcohol copolymer (EVALC F-101 BZ sold by Kuraray) (21 µm);
4. Rubber modified ethylene-α-olefin copolymer grafted with maleic anhydride (Admer^{™} 1335 E sold by Mitsui) (20 µm);
5. High flexural modulus polypropylene (Adstif^{™} 699 ADXP sold by Montell - flexural modulus of about 1950 MPa) blended with 1 % by weight of Hydrocerol^{™} CF 40 E (220 µm);
6. Rubber modified ethylene-α-olefin copolymer grafted with maleic anhydride (Admer^{™} 1335 E sold by Mitsui) (20 µm);
7. Blend of 66 % by weight of ionomer (Surlyn^{™} 1601 sold by DuPont), 24 % by weight of modified ethylene-vinyl acetate copolymer (Elvaloy^{™} 741A sold by DuPont), and 10 % of polybutene (Polybutene 8640 sold by Shell) (12 µm);
8. Ethylene-vinyl acetate copolymer (Escorene^{™} UL00909 sold by Exxon) (5 µm).

The co-extruded sheet has been quenched on a chill roll and calendered.

The thermoformability in-line of the obtained sheet was tested on a Multivac CD 6000 and RCD series machine for Vacuum Skin Packaging with forming depth of 10 and 20 mm. The sheet obtained in said Comparative Example could be thermoformed only with the sandwich plate and only at the following conditions :
- heating temperature : 150 °C
- forming pressure : 2.5 bar
- heating time : 4 seconds
- forming time : 5 seconds

## Claims

1. A thermoformable, multi-layer, sheet comprising a foamed layer (a) comprising polypropylene, a substantially unfoamed outer heat-sealing layer (c) and a foamed layer (b) comprising a polyethylene, positioned between layers (a) and (c).

2. The thermoformable multi-layer sheet of claim 1 wherein the flexural modulus of the polypropylene used for foam layer (a) is comprised between about 1,200 MPa and about 2,150 MPa, and is preferably ≥ 1,300 MPa, and more preferably ≥ 1,500 MPa.

3. The thermoformable multilayer sheet of claim 1 wherein the outer heat-sealing layer (c) comprises a polyolefin resin with a melting point < 140 °C, and preferably < 130°C.

4. The thermoformable multilayer sheet of claim 3 wherein the polyolefin resin of the outer heat-sealable layer (c) is selected from the group consisting of polyethylene homopolymers, ethylene-(C₄-C₈)-α-olefin copolymers having a density ≥ 0.915 g/cm³, blends thereof with minor amount of polyethylene homopolymers, ethylene-vinyl acetate copolymers, ethylene-acrylic or methacrylic acid copolymers including ionomers, ethylene-(C₄-C₅)-α-olefin copolymers having a density from about 0.915 g/cm³ to about 0.930 g/cm³, blends thereof with ethylene-vinyl acetate copolymers or ethylene-alkyl (meth)acrylate copolymers, ethylene-propylene-butene ter-polymers, and ethylene-alkyl acrylate-maleic anhydride ter-polymers.

5. The thermoformable multi-layer sheet of claim 1 wherein the polyethylene of foamed layer (b) is an optionally modified ethylene homopolymer or ethylene copolymer with one or more other olefins and/or with a non-olefinic comonomer copolymerizable with ethylene.

6. The thermoformable multi-layer sheet of claim 5 wherein the polyethylene of foamed layer (b) is selected from the group consisting of optionally modified polyethylenes, ethylene-(C₄-C₈)-α-olefin copolymers, ethylene-vinyl acetate copolymers, ethylene-ethyl acrylate copolymers, ethylene-butyl acrylate copolymers, ethylene-methyl acrylate copolymers, ethylene-acrylic acid copolymers, ethylene-methacrylic acid copolymers, ionomer resins, and ethylene-alkyl acrylate-maleic anhydride ter-polymers.

7. The thermoformable multi-layer sheet of claim 6 wherein the polyethylene of foam layer (b) is selected from the group consisting of ethylene homopolymers and ethylene copolymers with one or more (C₄-C₈)-α-olefins.

8. The thermoformable multi-layer sheet of claim 1 further comprising a substantially unfoamed gas barrier layer (d), comprising a polymeric material selected from ethylene-vinyl alcohol copolymers (EVOH), vinylidene chloride copolymers (PVDC), polyamides, and blends thereof.

9. The thermoformable multi-layer sheet of claim 1 wherein the overall thickness of the foamed polypropylene layers (a) is comprised between about 35 and about 80 % of the thickness of the entire sheet, preferably between about 40 and about 75 %, and even more preferably between about 45 and about 70 %, and the overall thickness of the polyethylene foamed layers (b) is comprised between about 15 and about 40 % of the thickness of the entire sheet, preferably between about 20 and about 35 %.

10. The thermoformable multi-layer sheet of claim 1 wherein the foamed layers (a) and (b) are chemically foamed.

11. The thermoformable multi-layer sheet of claim 1 which is coextruded.

12. The thermoformable multi-layer sheet of any of the preceding claims which has a flexural modulus ≥ 550 MPa, preferably ≥ 650 MPa, and more preferably ≥ 700 MPa.

13. A thermoformed article obtained from the sheet of any of the preceding claims.

## Patentansprüche

1. Thermoformbare Mehrschichtfolie mit einer Polypropylen umfassenden, geschäumten Schicht (a), einer im Wesentlichen ungeschäumten, äußeren Heißsiegelschicht (c) und einer Polyethylen umfassenden, geschäumten Schicht (b), die zwischen den Schichten (a) und (c) angeordnet ist.

2. Thermoformbare Mehrschichtfolie nach Anspruch 1, bei der der Elastizitätsmodul des für die Schaumschicht (a) verwendeten Polypropylens im Bereich von etwa 1.200 MPa und etwa 2.150 MPa liegt und vorzugsweise ≥ 1.300 MPa und insbesondere ≥ 1.500 MPa ist.

3. Thermoformbare Mehrschichtfolie nach Anspruch 1, bei der die äußere Heißsiegelschicht (c) ein Polyolefinharz mit einem Schmelzpunkt < 140°C und vorzugsweise < 130°C umfasst.

4. Thermoformbare Mehrschichtfolie nach Anspruch 3, bei der das Polyolefinharz der äußeren heißsiegelbaren Schicht (c) ausgewählt ist aus der Gruppe bestehend aus Polyethylenhomopolymeren, Ethylen-(C₄-C₈₎-α-Olefin-Copolymeren mit einer Dichte ≤ 0,915 g/cm³, Mischungen davon mit geringeren Mengen an Polyethylenhomopolymeren, Ethylen-Vinylacetat-Copolymeren, Ethylen-Acryl- oder -Methacrylsäure-Copolymeren einschließlich Ionomeren, Ethylen-(C₄-C₈)-α-Olefin-Copoylmeren mit einer Dichte von etwa 0,915 g/cm³ bis etwa 0,930 g/cm³, Mischungen davon mit Ethylen-Vinylacetat-Copolymeren oder Ethylen-Alkyl (meth)acrylat-Copolymeren, Ethylen-Propylen-Buten-Terpolymeren und Ethylen-Alkylacrylat-Maleinsäureanhydrid-Terpolymeren.

5. Thermoformbare Mehrschichtfolie nach Anspruch 1, bei der das Polyethylen der geschäumten Schicht (b) ein gegebenenfalls modifiziertes Ethylenhomopolymer oder Ethylencopolymer mit einem oder mehreren anderen Olefinen und/oder mit nicht-olefinischem, mit Ethylen copolymerisierbaren Comonomer ist.

6. Thermoformbare Mehrschichtfolie nach Anspruch 5, bei der das Polyethylen der geschäumten Schicht (b) ausgewählt ist aus der Gruppe bestehend aus gegebenenfalls modifizierten Polyethylenen, Ethylen-(C₄-C₈)-α-Olefin-Copolymeren, Ethylen-Vinylacetat-Copolymeren, Ethylen-Ethylacrylat-Copolymeren, Ethylen-Butylacrylat-Copolymeren, Ethylen-Methylacrylat-Copolymeren, Ethylene-Acrylsäure-Copolymeren, Ethylen-Methacrylsäure-Copolymeren, Ionomerharzen und Ethylen-Alkylacrylat-Maleinsäureanhydrid-Terpolymeren.

7. Thermoformbare Mehrschichtfolie nach Anspruch 6, bei der das Polyethylen der Schaumschicht (b) ausgewählt ist aus der Gruppe bestehend aus Ethylenhomopolymeren und Ethylencopolymeren mit einem oder mehreren (C₄-C₈)-α-Olefinen.

8. Thermoformbare Mehrschichtfolie nach Anspruch 1, die außerdem eine im Wesentlichen ungeschäumte Gasbarriereschicht (d) umfasst, die ein Polymermaterial ausgewählt aus Ethylen-Vinylalkohol-Copolymeren (EVOH), Vinylidenchloridcopolymeren (PVDC), Polyamiden und Mischungen davon umfasst.

9. Thermoformbare Mehrschichtfolie nach Anspruch 1, bei der die Gesamtdicke der geschäumten Polypropylenschichten (a) zwischen etwa 35 und etwa 80% der Dicke der gesamten Folie, vorzugsweise zwischen etwa 40 und etwa 75% und noch bevorzugter zwischen etwa 45 und etwa 70% liegt, und die Gesamtdicke der geschäumten Polyethylenschichten (b) zwischen etwa 15 und etwa 40% der Dicke der gesamten Folie, vorzugsweise zwischen etwa 20 und etwa 35% liegt.

10. Thermoformbare Mehrschichtfolie nach Anspruch 1, bei der die geschäumten Schichten (a) und (b) chemisch geschäumt sind.

11. Thermoformbare Mehrschichtfolie nach Anspruch 1, die koextrudiert ist.

12. Thermoformbare Mehrschichtfolie nach einem der vorangehenden Ansprüche, die einen Elastizitätsmodul ≥ 550 MPa, vorzugsweise ≥ 650 MPa und insbesondere ≥ 700 MPa besitzt.

13. Thermoformbarer Gegenstand erhalten aus der Folie gemäß einem der vorangehenden Ansprüche.

## Revendications

1. Feuille thermoformable, multi-couche, comprenant une couche de mousse (a) comprenant du polypropylène, une couche de thermo-scellement extérieure sensiblement non-moussée (c) et une couche moussée (b) comprenant un polyéthylène, positionnée entre les couches (a) et (c).

2. Feuille thermoformable multi-couche selon la revendication 1, où le module de flexion du polypropylène utilisé pour la couche de mousse (a) est compris entre environ 1.200 MPa et environ 2.150 MPa, et est de préférence ≥ 1.300 MPa, et selon une plus grande préférence ≥ 1.500 MPa.

3. Feuille thermoformable multi-couche selon la revendication 1, où la couche de thermoscellement extérieure (c) comprend une résine de polyoléfine avec un point de fusion <140°C, et de préférence <130°C.

4. Feuille thermoformable multi-couche selon la revendication 3, où la résine de polyoléfine de la couche de thermoscellement extérieure (c) est sélectionnée dans le groupe constitué de homopolymères de polyéthylène, copolymères d'éthylène (C₄-C₈)-α-oléfine ayant une densité ≤ 0,915 g/cm³, des mélanges de ceux-ci avec une quantité mineure de homopolymères de polyéthylène, copolymères d'éthylène-acétate de vinyle, copolymères d'éthylène-acide acrylique ou méthacrylique incluant des ionomères, copolymères d'éthylène-(C₄-C₈)-α-oléfine ayant une densité d'environ 0,915 g/cm³ à environ 0,930 g/cm³, des mélanges de ceux-ci avec des copolymères d'éthylène-acétate de vinyle ou des copolymères d'éthylène-alkyle (meth)acrylate, ter-polymères d'éthylène-propylène-butène, et ter-polymères d'éthylène-alkyle acrylate-anhydride maléïque.

5. Feuille thermoformable multi-couche selon la revendication 1, où le polyéthylène de la couche moussée (b) est un homopolymère d'éthylène ou copolymère d'éthylène optionnellement modifié avec une ou plusieurs autres oléfines et/ou avec un comonomère non-oléfinique copolymérisable avec l'éthylène.

6. Feuille thermoformable multi-couche selon la revendication 5, où le polyéthylène de la couche moussée (b) est sélectionné dans le groupe constitué de polyéthylènes optionnellement modifiés, copolymères d'éthylène-(C₄-C₈)-α-oléfine copolymères d'éthylène-acétate de vinyle, copolymères d'éthylène-acrylate d'éthyle, copolymères d'éthylène-acrylate de butyle, copolymères d'éthylène-acrylate de méthyle, copolymères d'éthylène-acide acrylique, copolymères d'éthylène acide méthacrylique, résines d'ionomères, et ter-polymères d'éthylène-acrylate d'alkyle-anhydride maléique.

7. Feuille thermoformable multi-couche selon la revendication 6, où le polyéthylène de la couche de mousse (b) est sélectionné dans le groupe constitué de homopolymères d'éthylène et de copolymères d'éthylène avec une ou plusieurs (C₄-C₈)-α-oléfines.

8. Feuille thermoformable multi-couche selon la revendication 1, comprenant en outre une couche de barrière aux gaz sensiblement non moussée (d), comprenant un matériau polymérique sélectionné parmi des copolymères éthylène-alcool vinylique (EVOH), copolymères de chlorure de vinylidène (PVDC), polyamides et leurs mélanges.

9. Feuille thermoformable multi-couche selon la revendication 1, où l'épaisseur totale des couches de polypropylène moussées (a) est comprise entre environ 35 et environ 80% de l'épaisseur de la feuille entière, de préférence entre environ 40 et environ 75% et selon une préférence encore plus grande entre environ 45 et environ 70%, et l'épaisseur totale des couches de polyéthylène moussées (b) est comprise entre environ 15 et environ 40% de l'épaisseur de la feuille entière, de préférence entre environ 20 et environ 35%.

10. Feuille thermoformable multi-couche selon la revendication 1, où les couches moussées (a) et (b) sont moussées chimiquement.

11. Feuille thermoformable multi-couche selon la revendication 1, qui est coextrudée.

12. Feuille thermoformable multi-couche selon l'une quelconque des revendications précédentes, qui possède un module de flexion de ≥ 550 MPa, de préférence de ≥ 650 MPa, et selon une plus grande préférence ≥ 700 MPa.

13. Article thermoformé obtenu à partir de la feuille selon l'une quelconque des revendications précédentes.
